# EUROPEAN PATENT APPLICATION

(11) **EP 1 526 707 A1**
(43) Date of publication of application: **27.04.2005**
(21) Application number: 03078368.2
(22) Date of filing: 24.10.2003
(51) Int. Cl.: H04M 7/00, G06F 17/30

(54) **Generation of a Hyperlink to a service provider from contact informations of a text file**

(71) Applicant: Nederlandse Organisatie voor Toegepast-Natuurwetenschappelijk Onderzoek TNO, 2628 VK Delft (NL)
(72) Inventor: Meulenhoff, Pieter Jan, 9725 LL Groningen (NL); Van der Werff, Martin Remco, 9741 PE Groningen (NL)
(74) Representative: Prins, Adrianus Willem, Mr. Ir.

(57) **Abstract**

Method and means for establishing an activatable object in digital files. Initially, one or more search functions are defined, each linked to a processing function. Each file is investigated then on comprising one or more data elements matching with at least one of said one or more search functions and each matching data element is converted into an activatable object, linked in accordance with the relevant processing function. Files to be investigated, may be sent from a first service provider (2, 5) to the data terminal (4) of a user, said investigation being done by the first service provider or by the data terminal. The processing functions may relate to the address of a second service provider (8), fit to process the relevant matching data element. e.g. to establish a connection between the relevant telephone number, derived from the file, and the telephone number of a first user, via a telephone network.

## Description

### FIELD OF THE INVENTION

The present invention relates to a method and system for establishing activatable objects in digital files, e.g. for advanced telephony.

### BACKGROUND OF THE INVENTION

The present patent application may be seen more or less as a continuation and/or exploration of the subject matter of a previous patent application, EP02077354, filed by the same applicant. Said previous application discloses a method and means for interconnecting a public telephony network and a public data network like the Internet, thus enabling the voice network to be controlled by Internet servers and/or vice versa.

### SUMMARY OF THE INVENTION

One aim of the present invention is to present a method and means for realizing that when e.g. an Internet page is displayed to a user's (client) terminal, the user is enabled e.g. to dial a displayed telephone number by only one "click"-action, independent whether or not the originating page provider displayed the telephone number in a "clickable" format. Further aims are to modify other kinds of information elements into clickable format, thus enabling "one-click"-user action for several kinds of information, displayed via e.g. the Internet.

The method according to the invention, aiming the establishment of an activatable (e.g. "clickable") object in a digital file, may comprise the following steps:
- one or more search functions are defined, each linked to a processing function;
- the file is investigated on comprising one or more data elements matching with at least one of said one or more search functions;
- each matching data element is converted into an activatable object, linked in accordance with the relevant processing function.

The definition (and/or registration) of the search functions and the processing functions may be carried out in a preliminary stage. For instance, the search function and the linked (coupled) processing function may comprise a rule like: "IF a data string - exclusive (HTML) control codes- is a series of 9 numeric characters preceded by a '0' or a series of 11 numeric characters preceded by a '+' THEN convert data string into format '<a href="http://www.webtel.telecom.tno.nl/makecall.jsp?bnumber=<detected telephone number> </a>'.
In this (simplified) example the rule part "a data string -exclusive (HTML) control codes- is a series of 9 numeric characters preceded by a '0' or a series of 11 numeric characters preceded by a '+''' forms the search function, where "convert data string into format '<a href="http://www.webtel.telecom.tno.nl/makecall.jsp?bnumber=<detected telephone number> </a>''' forms the processing function, in this example resulting into an Internet link to e.g. a server which has been presented in applicant's prior patent application EP02077354.

Files to be investigated may be sent from a first service provider to the data terminal of a first user, said investigation being done by or under control of said first service provider. In this option the conversion is performed within the domain of e.g. an Internet service provider or the proxy server of e.g. a Local Area Network (LAN). Another option is files, sent from a first service provider to the data terminal (client) of a first user, to have investigated by or under control of said first user's terminal. In this option the conversion is performed within the domain of the user and/or terminal.

One or more of the coupled processing functions may relate to the address of a second service provider, fit to process the relevant matching data element. As illustrated before, one search function may relate to the format of a telephone number and the coupled processing function to the address of a second service provider, fit to establish a connection between the relevant telephone number, derived from the file, and the telephone number of a first user, via a telephone network. To be able to connect the derived telephone number with the user's telephone number, it may be necessary to register, via a subscription process (free or not free of charge), the user's telephone number.

Below the method presented above will be discussed with the aid of an exemplary embodiment of a system that is fit for performing that method.

### FIGURES

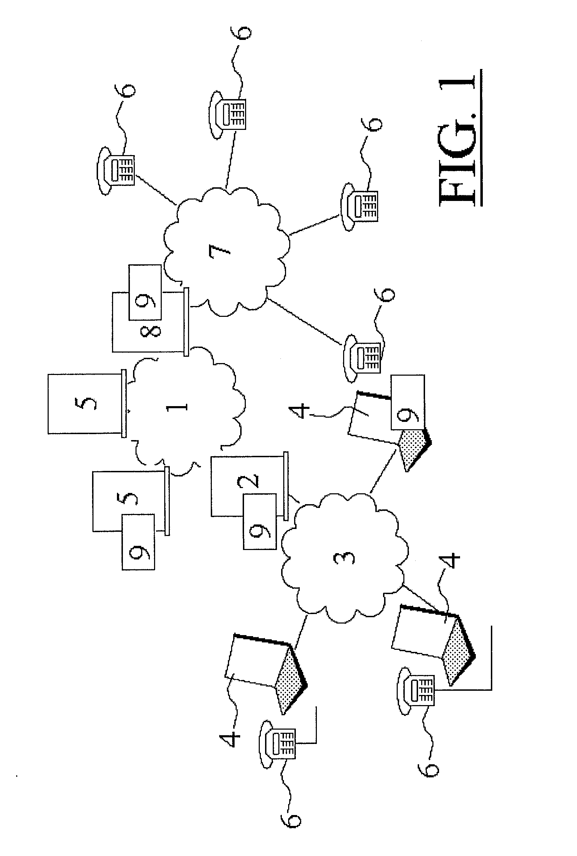

Figure 1 shows a system in which the above method may be executed. The figure shows an IP based network 1, e.g. the Internet, accessible via an access or proxy server 2. Via an e.g. local network 3, terminals 4 are connected, which may look for or download information via the Internet, supplied by content servers 5. Telephone terminals 6 may be connectable one another via a telephone network 7. The Internet 1 and the (public and/or private) telephone network 7 are interconnected by means of an Internet/telephone interworking server 8, e.g. an Internet/telephone server as disclosed in the prior patent application EP02077354.

As stated before, the depicted system has to be fit for establishing activatable objects in digital files. To that end a "function" is present in the system, which comprises means for registering one or more search functions, each linked to a processing function, means for investigating the files on comprising one or more data elements matching with at least one of said one or more search functions, and means for converting each matching data element into an activatable object, linked in accordance with the relevant processing function. Said function may be performed by one module 9 or, if preferred by a distributed set of co-operating modules 9.

For instance, the function may be embodied by a module being comprised (as an internal module) or controlled (as an external module) by the service provider's server 2, which is fit for sending requested files to the data terminal 4 of a first user. The (internal or external) module 9 is fit for carrying out the investigation and conversion function for the access server 2, thus serving all connected terminals 4. Alternatively, the investigation and conversion function may be embodied by a module 9 within (as an internal module) or controlled (as an external module) by the data terminal 4, which is fit for receiving files from e.g. content providers 5 via the service provider or proxy server 2. Those local modules 9 are fit for carrying out said investigation and conversion for (only) the relevant data terminal 4. One or more of the coupled processing functions may relate to the (Internet) address of a second service provider, fit to process the relevant matching data element after its conversion.

One of the search functions in the module(s) 9 may relate to the format of a telephone number, as discussed above, and the coupled processing function then may relate to the address of the server 8 of a service provider that is fit to establish a connection between the relevant telephone number, derived from the file, and the telephone number of a first user, via a telephone network.

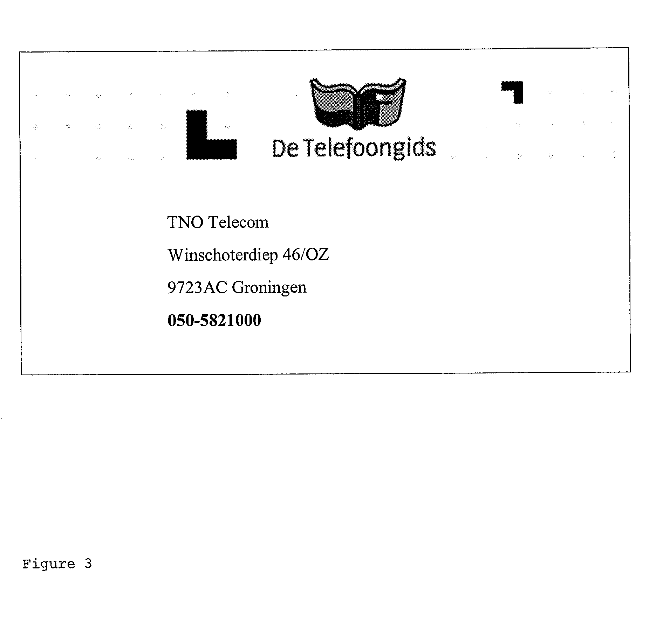

Figure 3 shows an example of an (simplified) Internet page of "De Telefoongids" ("The Telephone Directory"), displaying the address and telephone number of TNO Telecom in Groningen (NL).

The source text of the page of figure 3 is an ASCII file, looking like this:
<!DOCTYPE HTML PUBLIC "-//W3C//DTD HTML 3.2 Final//EN">
<html xmlns:v="urn:schemas-microsoft-com:vml"
..... **050-5821000 ....** </div></body></html>

The source file somewhere contains the text string "050-5821000". Now the software in module 9 establishes an activatable object in the page's source files, using a sub module 9a in which are registered one or more search functions, each linked to a processing function. In this example the search function may comprise (already stated above) a search statement like "IF a data string -exclusive redundant characters- is a series of 9 numeric characters preceded by a '0' or a series of 11 numeric characters preceded by a '+'". After having found such a matching string, viz. the string '0505821000', the software activates the relevant processing function: "replace <detected telephone number(=0505821000)> into <a href=http://www.webtel.telecom.tno.nl /makecall.jsp?bnumber=<detected telephone number (=0505821000)> "<original string (="050-5821000")> </a>'.

The result of this operation is that the above source file will be modified into
<!DOCTYPE HTML PUBLIC "-//W3C//DTD HTML 3.2 Final//EN">
<html xmlns:v="urn:schemas-microsoft-com:vml"
**..... <a href=http://www.webtel.telecom.tno.nl/makecall.jsp?bnumber=0505821000**
**"050-5821000" </a>....** </div></body></html>

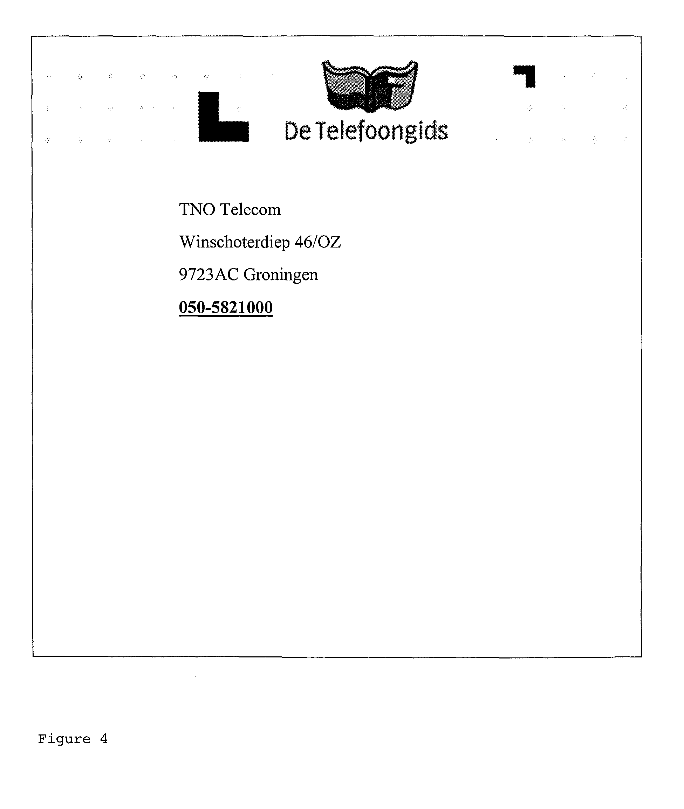

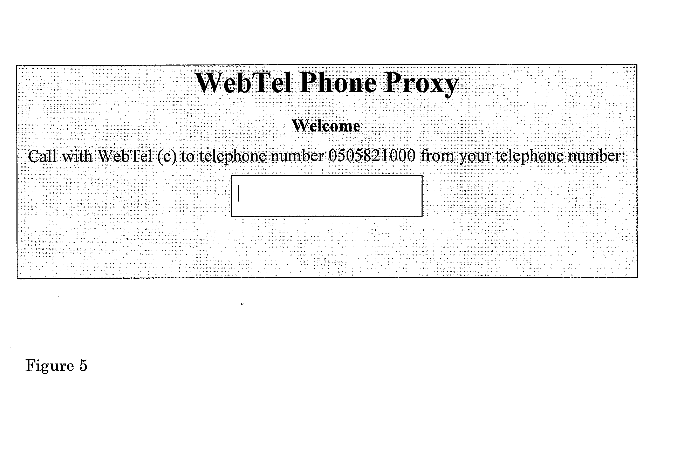

Figure 4 shows that the result to the displayed web page is that the -originally not linkable/clickable telephone number 050-5821000 is displayed, but now in linkable format (indicated by underlined display of the telephone number 050-5821000), thus enabling the terminal user to "click-to-dial".
When now the user "clicks" the telephone number, the Internet link http://www.webtel.telecom.tno.nl/makecall.jsp?bnumber=0505821000 will be activated by the user's terminal and client software, thus making a connection to the Internet/telephone gateway server 8, which may react with a page like the one shown in figure 5.

After the user submits his/her telephone number, the ("WebTel") server 8 will realize a connection via the telephone network 7 between two telephone terminals 6, viz. the user's telephone number ("A number") and the telephone number derived from the Internet page, 0505821000.

About the entry of the user's own telephone number, their may be a problem with it, while normally a telephone user is not allowed to use another A-number than his/her own terminal or network node number, assigned by the relevant telecom network provider. So, preferably, the user has to register -in an initial stage- to the "click-to-dial" service. The registration process may e.g. be performed by means of the user's telephone terminal 6, making a call to the telephone/Internet gateway server 8. Server 8 is able to pick-up the user telephone terminal's "Calling Line Identifier" (CLI), assigned to a terminal identifier or telephone network access node number, and to forward that CLI -which cannot be altered by the user- to the relevant server 2 or 5 which is enabled for the registration process, e.g. by means of a voice response system and a registration database. It may be advantageous to provide the Internet access server 2, one of the servers 5 or the gateway server 8 with the file conversion module 9 as well as with such a voice response and registration system, which may or may not be integrated in module 9 (see below).

It is noted that the above only is an application example of method and/or system according to the invention. Instead of telephone numbers, like in the above example, other kinds of specific data strings could be comprised in the search functions that initially are defined, each linked to a specific processing function. For instance, (Internet page) files could be investigated on comprising ZIP codes in e.g. the format "9999+ZZ" ("9" stands for a numerical character, "Z" for a non-numerical one), to be linked, after the conversion process in module 9, to e.g. a server 5 comprising a "ZIP to Address" database. Another example is to investigate the presence, in Internet pages, of amounts of money, which items could be converted to the address of a server that is fit for financial transactions, e.g. a bank. In an initial stage, the user could register at his/her home banker's server, in about the same way as initial registering for the telephone service discussed before, so that banking via the Internet could be improved.

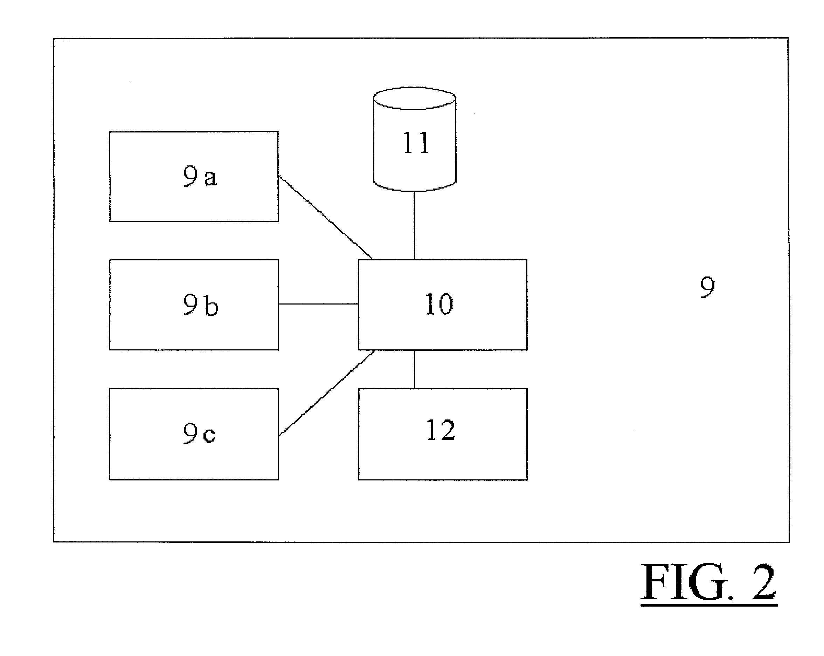

Finally, for sake of clarity, figure 2 shows an example of module 9 more in detail. Module 9 may comprise a sub-module 9a for the registration of one or more search functions, each linked to a processing function, a sub-module 9b for investigating the files on comprising one or more data elements matching with at least one of said one or more search functions, and a sub-module 9c for converting each matching data element into an activatable object, linked in accordance with the relevant processing function. All sub-modules of module 9 may be under control of a control sub-module 10. Relevant data may be registered in a database 10. Finally, module 9 may comprise a voice response sub-module 12, to be used for the registration of user data; the voice response dialog data etc. may be stored in de database 10 too.
So sub-module 9a is used for the registration of one or more search functions, each linked to a processing function. In an initial stage the relevant search functions -e.g. pointing to the format of data elements comprising a telephone number, a ZIP code or an amount of money (price)- is loaded and stored into the database 11, each of them linked to a relevant processing function, e.g. resulting into the address of a relevant (second) service provider 8, fit to process the relevant matching data element. Sub-module 9b matches all data elements in the data stream of the files with the search functions read from database 11. Finally, sub-module 9c converts each matching data element into the relevant activatable object in accordance with the relevant processing function read from database 11. Sub-module 9c may also generate a user dialog screen like shown above ("WebTel Phone Proxy"), fit to activate the link to telephone gateway server 8 and to submit a request to connect the "A-number" and the "B-number". Coordination of all sub-module processes may be done by control sub-module 10. A user's own telephone number ("A-number"), derived via a telephone call to server 8 and other user-related data, like e.g. banking data, may be collected by the voice response sub-module 12. The voice response dialog data etc. as well as the collected user data (e.g. the proper "A-number") may be stored in de database 11, from which it may be read out by sub-module 9c.

## Claims

1. Method for establishing an activatable object in a digital file, comprising the steps of:
- one or more search functions are defined, each linked to a processing function;
- the file is investigated on comprising one or more data elements matching with at least one of said one or more search functions;
- each matching data element is converted into an activatable object, linked in accordance with the relevant processing function.

2. Method according to claim 1, the file to be investigated, is a file to be sent from a first service provider (2, 5) to the data terminal (4) of a first user, said investigation being done by or under control of said first service provider.

3. Method according to claim 1, said file to be investigated, is a file sent from a first service provider to the data terminal of a first user, said investigation being done by or under control of said first user's terminal.

4. Method according to claim 1, one or more of the coupled processing functions relating to the address of a second service provider (8), fit to process the relevant matching data element.

5. Method according to claim 1, one search function relating to the format of a telephone number and the coupled processing function relating to the address of a second service provider, fit to establish a connection between the relevant telephone number, derived from the file, and the telephone number of a first user, via a telephone network.

6. System for establishing activatable objects in digital files, comprising means (9a) for registering one or more search functions, each linked to a processing function, means (9b) for investigating the files on comprising one or more data elements matching with at least one of said one or more search functions, and means (9c) for converting each matching data element into an activatable object, linked in accordance with the relevant processing function.

7. System according to claim 6, being comprised or controlled by a service provider (2, 5) fit for sending said files to the data terminal (4) of a first user, the system being fit for carrying out said investigation and conversion for said first service provider.

8. System according to claim 6, being comprised or controlled by the data terminal (4) of a first user fit for receiving said files from a first service provider (2, 5), the system being fit for carrying out said investigation and conversion for said data terminal.

9. System according to claim 6, one or more of the coupled processing functions relating to the address of a second service provider (8), fit to process the relevant matching data element.

10. System according to claim 6, one search function relating to the format of a telephone number (4) and the coupled processing function relating to the address of a second service provider (8), fit to establish a connection between the relevant telephone number, derived from the file, and the telephone number of a first user, via a telephone network (7).

11. Software for establishing an activatable object in digital files, comprising a first module (9a) for registering one or more search functions, each linked to a processing function, a second module (9b) for investigating the files on comprising one or more data elements matching with at least one of said one or more search functions, and a third module (9c) for converting each matching data element into an activatable object, linked in accordance with the relevant processing function.

12. Software according to claim 11, one or more of the coupled processing functions relating to the address of a second service provider (8), fit to process the relevant matching data element.

13. Software according to claim 12, one search function relating to the format of a telephone number and the coupled processing function relating to the address of a second service provider (8), fit to establish a connection between the relevant telephone number, derived from the file, and the telephone number of a first user, via a telephone network (7).
